# EUROPEAN PATENT SPECIFICATION

(11) **EP 3 817 021 B1**
(45) Date of publication and mention of the grant of the patent: **12.11.2025**
(21) Application number: 19826268.5
(22) Date of filing: 29.05.2019
(51) Int. Cl.: H01G 11/08, H01G 11/10, H01G 11/16, H02H 9/04

(54) **ULTRA-CAPACITOR MODULE**
ULTRAKONDENSATORMODUL
MODULE ULTRA-CONDENSATEUR

(30) Priority: 29.06.2018 KR 20180075831; 10.05.2019 KR 20190055025
(43) Date of publication of application: 05.05.2021
(73) Proprietor: LS Materials Co., Ltd., Anyang-si, Gyeonggi-do 14118 (KR)
(72) Inventor: YOO, Yong Hyeon, Anyang-si Gyeonggi-do 14119 (KR); KIM, Shin Won, Anyang-si Gyeonggi-do 14119 (KR); KIM, Heui Soo, Anyang-si Gyeonggi-do 14119 (KR); KANG, Ho Rim, Anyang-si Gyeonggi-do 14119 (KR); KIM, Sung Hyun, Anyang-si Gyeonggi-do 14119 (KR)
(74) Representative: Botti & Ferrari S.p.A.
(86) International application number: PCT/KR2019/006429
(87) International publication number: WO 2020/004819

(56) References cited:
- EP-A1- 1 846 776
- EP-A1- 2 177 921
- EP-B1- 1 846 776
- WO-A2-2011/119219
- CN-A- 103 236 792
- JP-A- 2013 051 857
- JP-A- 2013 243 131
- KR-A- 20130 109 066
- KR-A- 20140 124 485
- KR-A- 20160 073 078
- KR-B1- 101 748 355
- KR-U- 20170 002 905
- US-A1- 2013 215 535

## Description

### [Technical Field]

The present disclosure relates to an ultra-capacitor module and, more particularly, to an ultra-capacitor module having a signal insulation device for insulating digital signals.

### [Background Art]

An ultra-capacitor (UC), also referred to as a super capacitor, is an energy storage device occupying a position, in terms of characteristics, between that of an electrolytic capacitor and that of a secondary battery. Due to high efficiency and semi-permanent life span, ultra-capacitors are considered as next-generation energy storage devices that can be used in tandem with or instead of secondary batteries.

Ultra-capacitors only have voltages of 3V or less, and when an ultra-capacitor is to be applied to a high-voltage application, an ultra-capacitor module including multiple ultra-capacitors connected in series is used.

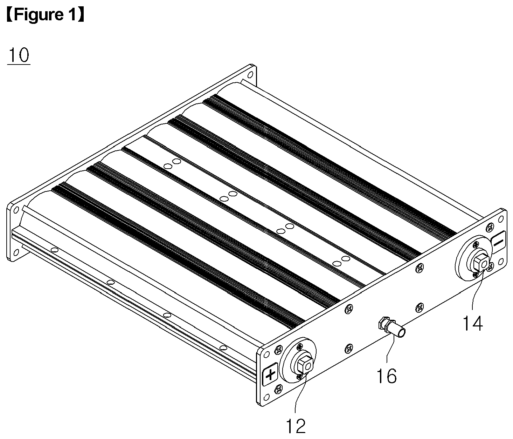

FIG. 1 is a perspective view schematically illustrating an example of a conventional ultra-capacitor module. The ultra-capacitor module 10 has a cell assembly (not illustrated) including multiple ultra-capacitors and a circuit board assembly (not illustrated) contained therein. The ultra-capacitor module 10 has electrode terminals 12 and 14 provided on a side surface thereof so as to charge/discharge the multiple ultra-capacitors. In addition, the ultra-capacitor module 10 may have a digital signal connector 16 or the like provided on a side surface thereof so as to monitor the operating state of the multiple ultra-capacitors.

In the case of such an ultra-capacitor module, a voltage imbalance may occur between respective ultra-capacitors as a result of the initial voltage, capacity deviation, leak current deviation, internal resistance deviation, and the like of respective ultra-capacitors, and respective ultra-capacitors constituting the module may have different life spans accordingly. This poses a problem in that, if the ultra-capacitor having the highest voltage among the ultra-capacitors is inoperable, the corresponding module inevitably becomes inoperable, even if the remaining ultra-capacitors are still available, consequently shortening the life span of the ultra-capacitor module.

In an attempt to solve such problems, the ultra-capacitor module is equipped with a voltage balancing circuit for balancing voltages of the ultra-capacitors. In addition to the voltage balancing circuit, the ultra-capacitor module is equipped with an overvoltage notification circuit for warning that the voltage of some ultra-capacitors has increased above a specific level.

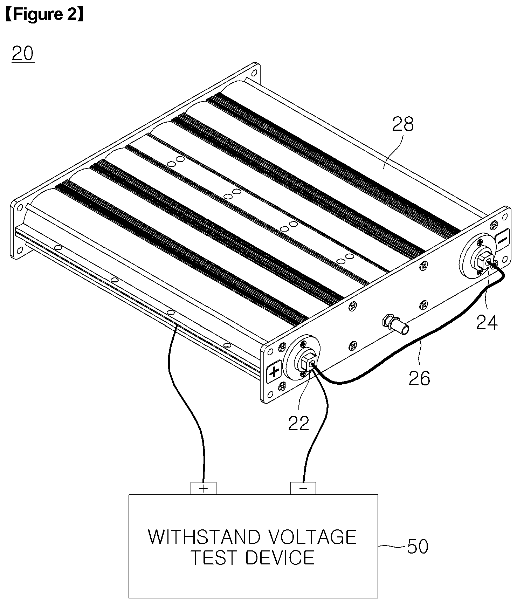

Meanwhile, an energy storage system (ESS) applied to an industrial system is commonly designed to withstand high voltages (hundreds of voltages or higher), and it is necessary to design the ESS so as to have a predetermined withstand voltage (that is, insulation level) between the electrode terminal and the case thereof, in order to guarantee safe use. Accordingly, a conventional ESS is designed such that, when the positive terminal 22 and the negative terminal 24 of the ESS 20 are connected by a cable 26, as illustrated in FIG. 2, when measurement terminals of a withstand voltage test device 50 are connected to the electrode terminals 22 and 24 and the case 28, respectively, and when a predetermined high voltage (for example, 4.2kV) is applied to the electrode terminals 22 and 24 and the case 28 through the measurement terminals, the insulation resistance between the electrode terminals 22 and 24 and the case 28 is not destroyed.

Meanwhile, in the case of industrial fields related to industrial motors and motor drivers, it has recently become a trend to use various control and alarm signals by connecting them to a programmable logical controller (PLC), in order to reduce costs. However, in the case of a structure in which digital signals from an industrial motor and a motor driver are connected to a PLC through a wire, an electric shock accident may occur if the user contacts the wire. As a result, in the case of industrial fields related to industrial motors and motor drivers, it is required to follow safety standards defined by internal standard specification IEC 61800-5-1.

In order to apply ESSs in such industrial fields related to industrial motors and motor drivers, the same safety standards need to be satisfied. The corresponding safety standards require not only a high withstand voltage between the electrode terminal and the case of the ESS, but also a constant withstand voltage between the electrode terminal and the digital signal connector and between the case and the digital signal connector.

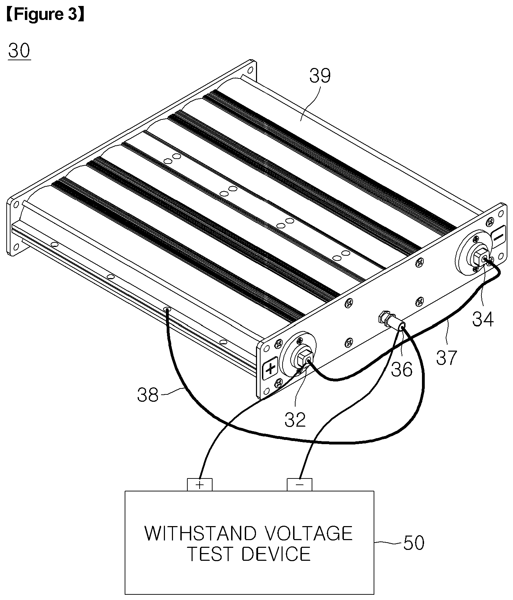

However, conventional ESSs have a problem in that, when the positive terminal 32 and the negative terminal 34 of a conventional ESS 30 are connected by a cable 37, as illustrated in FIG. 3, when the digital signal connector 36 and the case 39 are connected by a second cable 38, when measurement terminals of a withstand voltage test device 50 are connected to the electrode terminals 32 and 34 and the digital signal connector 36, respectively, and when a predetermined high voltage (4.2kV) is then applied, the insulation resistance between the electrode terminals 32 and 34 and the digital signal connector 36 of the ESS 30 is destroyed. Therefore, it is necessary to design an ESS that satisfies industrial safety standards required by internal standard specifications.

US2013/215535A1 discloses an energy storage subsystem including a metal casing and an electrical storage system mechanically fastened within the metal casing and including at least one super-capacitor module having a plurality of super-capacitors linked together in series.

KR101748355B1 discloses a charger/discharger having a balancing function of a supercapacitor and a control method thereof in which a circuit of a charge/discharge unit of a supercapacitor is used for cell balancing.

CN103236792A discloses a lossless dynamic voltage-sharing circuit, which comprises a standard voltage-sharing circuit, a voltage division circuit, a switching power supply and a dynamic feedback circuit. According to the lossless dynamic voltage-sharing circuit, the capacitor energy is fully utilized in a lossless way.

EP2177921A1 discloses a signal status diagnosing device for an external control means, which is enabled even by a simple constitution to prevent the rise of a production cost due to the increase in a parts count or the complexity of a circuit constitution, and which can perform a signal status diagnosis of an actuator (the external control means) such as an electromagnetic valve, a lamp, a relay or a small-sized DC motor precisely.

JP2013051857A discloses power storage units which are connected in series to a plurality of battery groups each being constituted of a plurality of battery cells or a plurality of battery blocks, and series circuits constituted of first coils and first switching elements, which are connected in parallel to each of the battery groups of the plurality of power storage units connected in series.

EP1846776A1 discloses a battery management system for use with one or more cells comprising the system having one or more battery monitor and programmable logic which is connected to the one or more battery monitor to modify its battery operation and report battery status.

WO2011/119219A2 discloses a system and method for providing a high efficiency bypass circuit for multi-stage direct current to direct current (DC-DC) converters used in battery powered systems.

### [Disclosure]

### [Technical Problem]

It is an aspect of the present disclosure to solve the above-mentioned problems and other problems. It is another aspect of the present disclosure to provide an ultra-capacitor module that satisfies industrial safety standards required by internal standard specifications.

It is another aspect of the present disclosure to provide an ultra-capacitor module having a signal insulation device for insulating digital signals output from a cell management device.

It is another aspect of the present disclosure to provide an ultra-capacitor module having a signal insulation device for improving high-voltage insulation resistance between an electrode terminal and a digital signal connector.

### [Technical Solution]

In accordance with an aspect, the present disclosure provides an ultra-capacitor module as defined in claim 1 including: a cell assembly including a plurality of ultra-capacitors a cell management device electrically connected to the cell assembly, the cell management device including a plurality of overvoltage detectors, each of which is electrically connected to one of the plurality of ultra-capacitors; a case module for accommodating the cell assembly and the cell management device; and a signal insulation device mounted on the case module and electrically connected to the cell management device. The signal insulation device comprises a signal insulation relay for insulating a digital signal output from the cell management device, a relay power unit of which an output terminal is electrically connected to a first input terminal of the signal insulation relay, and a relay driving unit of which an output terminal is electrically connected to a second input terminal of the signal insulation relay.

In addition, the signal insulation relay may include an electromagnet and a mechanical switch. In addition, the signal insulation relay may include a solid state relay without a mechanical contact.

More preferably, the relay power unit is electrically connected to electrode terminals mounted on the case module to receive an output voltage of the electrode terminals.

More preferably, the relay driving unit has an input terminal electrically connected to an output connector of the cell management device to receive the digital signal, and the output terminal electrically connected to the second input terminal of the signal insulation relay.

More preferably, the signal insulation device may be composed of a substrate assembly and a housing module accommodating the substrate assembly. The substrate assembly may be formed by mounting electrical components corresponding to the relay power unit, the relay driving unit, and the signal insulation relay onto a circuit board. When first electronic components connected to the input terminals of the signal insulation relay are mounted on the first area of the circuit board, and second electronic components connected to the output terminal of the signal insulation relay are mounted on the second area of the circuit board, the first area and the second area of the circuit board may be arranged to be spaced apart by a predetermined distance or more.

The signal insulation device has input terminals electrically connected to electrode terminals of the ultra-capacitor module and an output connector of the cell management device, respectively, and output terminals of the overvoltage detectors are electrically connected to an input terminal of the output connector.

The ultra-capacitor module further comprises a digital signal connector configured to be mounted on one side of the signal insulation device.

The signal insulation device is disposed between an output connector of the cell management device and the digital signal connector to electrically insulate between the output connector of the cell management device and the digital signal connector.

The signal insulation device outputs the insulated digital signal to an external manage system through the digital signal connector.

### [Advantageous Effects]

An ultra-capacitor module according to the claims of the present disclosure is advantageous as follows:
According to at least one of the embodiments of the present disclosure, a signal insulation device for insulating digital signals output from a cell management device is mounted on the ultra-capacitor module, thereby satisfying industrial safety standards required by internal standard specifications.

In addition, according to at least one of the embodiments of the present disclosure, a signal insulation device disposed between an output connector of a cell management device and a digital signal connector thereof is mounted on the ultra-capacitor module, thereby improving high-voltage insulation resistance between the electrode terminal of the ultra-capacitor module and the digital signal connector thereof.

However, advantageous effects achievable by the ultra-capacitor module according to embodiments of the present disclosure are not limited to those mentioned above, and other advantageous effects not mentioned herein could be clearly understood by a person skilled in the art to which the present disclosure pertains from the following description and the appended claims.

### [Description of Drawings]

FIG. 1 is a perspective diagram schematically illustrating an example of a conventional ultra-capacitor module;
FIG. 2 is a diagram illustrating a method of testing withstand voltage between an electrode terminal and a case of a conventional ultra-capacitor module;
FIG. 3 is a diagram illustrating a method of testing withstand voltage between an electrode terminal, a case, and a digital signal connector of a conventional ultra-capacitor module;
FIG. 4 is a perspective diagram illustrating the appearance of an ultra-capacitor module according to an embodiment of the present disclosure;
FIG. 5 is a functional block diagram of an ultra-capacitor module according to an embodiment of the present disclosure;
FIG. 6 is a circuit diagram of an ultra-capacitor module according to an embodiment of the present disclosure;
FIG. 7 is a block diagram illustrating a signal insulation device according to an embodiment of the present disclosure;
FIG. 8 is a detailed circuit diagram of a signal insulation device according to a first embodiment of the present disclosure;
FIG. 9 is a detailed circuit diagram of a signal insulation device according to a second embodiment of the present disclosure; and
FIG. 10 is a diagram illustrating a method of testing the withstand voltage between an electrode terminal and a digital signal connector of an ultra-capacitor module according to the present disclosure.

### [Mode for Invention]

Hereinafter, exemplary embodiments disclosed in this specification will be described in detail with reference to the accompanying drawings, but identical or similar elements are denoted by the same reference numerals regardless of reference numerals, and redundant descriptions thereof will be omitted. Hereinafter, in describing the embodiments disclosed in this specification, when it is determined that a detailed description of related known technologies may obscure the subject matter of the embodiments disclosed in this specification, the detailed description thereof will be omitted. In addition, the accompanying drawings are for easy understanding of the embodiments disclosed in this specification, and the technical idea disclosed in this specification is not limited by the accompanying drawings, and it should be understood to include all modifications, equivalents, or substitutes included in the scope of the present disclosure and the appended claims.

The present disclosure proposes an ultra-capacitor module that satisfies the industrial safety standards required by international standard regulations. In addition, the present disclosure proposes an ultra-capacitor module having a signal insulation device for insulating a digital signal output from a cell management device, in particular, an overvoltage alarm signal (OVA signal). In addition, the present disclosure proposes an ultra-capacitor module including a signal insulation device for improving high voltage insulation resistance between an electrode terminal and a digital signal connector.

Hereinafter, various embodiments of the present disclosure will be described in detail with reference to the drawings.

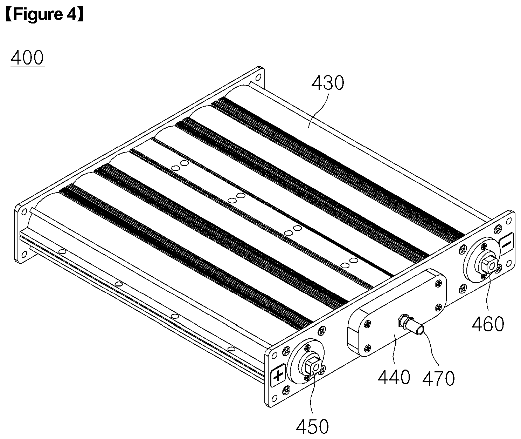

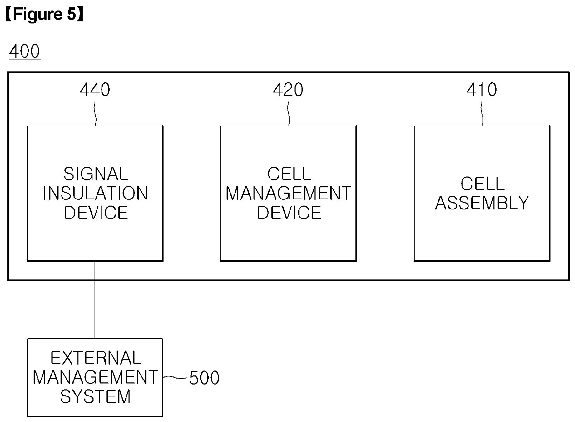

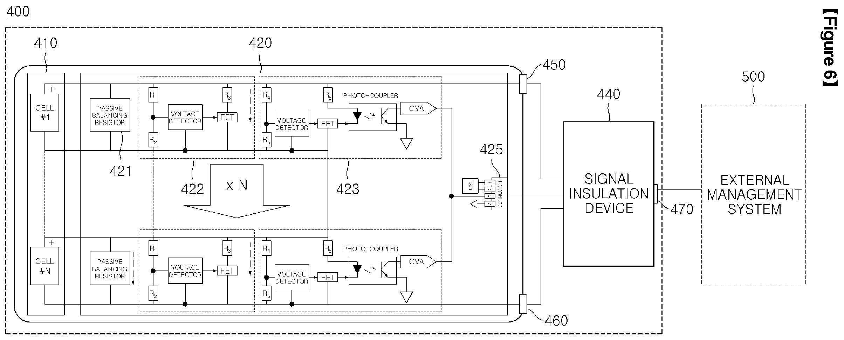

FIG. 4 is a perspective diagram illustrating the appearance of an ultra-capacitor module according to an embodiment of the present disclosure, FIG. 5 is a functional block diagram of an ultra-capacitor module according to an embodiment of the present disclosure, and FIG. 6 is a circuit diagram of an ultra-capacitor module according to an embodiment of the present disclosure.

Referring to FIGS. 4 to 6, the ultra-capacitor module 400 according to an embodiment of the present disclosure may include a cell assembly 410, a cell management device 420 electrically connected to the cell assembly 410, a case module 430 for accommodating the cell assembly 410 and the cell management device 420, and a signal insulation device 440 mounted on one side of the case module 430.

The cell assembly 410 may be formed by electrically connecting at least two or more ultra-capacitor cells 411. The ultra-capacitor 411 constituting the cell assembly 410 has a fast charge/discharge characteristic, and accordingly, the ultra-capacitor 411 may be used not only as an auxiliary power source for mobile communication information devices such as mobile phones, notebook computers, and PDAs, but also as a main power source or an auxiliary power source of an electric vehicle or hybrid vehicle, a power supply device for a solar cell, or an uninterruptible power supply (UPS) device that requires high capacity.

Each of the ultra-capacitors 411 may have a cylindrical or rectangular shape, and may be electrically connected to other ultra-capacitors in a longitudinal direction in which an electrode is formed to configure the cell assembly 410. In this case, the electrical connection between the neighboring ultra-capacitors may be implemented by a connection member, for example, a nut and/or a bus bar.

The ultra-capacitor 411 may include a bare cell, first and second inner terminals, first and second outer terminals, and a case. The bare cell is called an electrode element, and is formed by winding an anode, a cathode, and a separator. The first inner terminal is formed to be electrically connected to the anode of the bare cell, and the second inner terminal is formed to be electrically connected to the cathode of the bare cell. The first outer terminal is integrally coupled with the first inner terminal to seal an upper end of the case, and the second outer terminal is integrally coupled with the second inner terminal to seal a lower end of the case. The case is configured to have an inner space for accommodating the bare cell.

The cell management device (or cell balancing device) 420 may be configured by mounting passive and active devices for managing and monitoring the operation states (e.g., cell voltage states) of a plurality of ultra-capacitors on a circuit board. The cell management device 420 may be configured to be electrically connected to the plurality of ultra-capacitors 411 constituting the cell assembly 410.

The cell management device 420 may include first voltage balancing units 421 for performing a passive cell balancing function, second voltage balancing units 422 for performing an active cell balancing function, overvoltage detectors 423 for detecting overvoltage of the ultra-capacitors, and an output connector 425 for outputting a digital signal related to operating states of the ultra-capacitors.

The first voltage balancing units 421 may be connected in parallel to each of the ultra-capacitors 411 and may perform a function of continuously discharging the voltage of each of the ultra-capacitors 411. As an example, the first voltage balancing unit 421 may be configured with a resistance device R having a predetermined resistance value.

The second voltage balancing units 422 may be connected in parallel to each of the ultra-capacitors 411 and may perform a function of actively discharging the voltage of each of the ultra-capacitors 411 until the voltage of each of the ultra-capacitors 411 becomes less than or equal to a first threshold voltage when the voltage of each ultra-capacitor 411 exceeds the first predetermined threshold voltage.

In an embodiment, the second voltage balancing unit 422 may include first to third resistors R₁ ~ R₃, a first voltage detector, and a first switch.

The first and second resistors R₁ and R₂ are resistors for adjusting the first threshold voltage value, and allow the value of the first threshold voltage to be adjusted by adjusting the resistance value. The third resistor R₃ is connected in series with the ultra-capacitor 411 to discharge the voltage of the ultra-capacitor 411 when the first switch is turned on.

The first voltage detector detects the voltage of the ultra-capacitors 411, and when the voltage of the ultra-capacitors 411 exceeds the first threshold voltage, the first voltage detector turns on the first switch so that the voltage of the ultra-capacitor 411 is discharged through the third resistor R₃. When the voltage of the ultra-capacitor 411 falls below the first threshold voltage, the first voltage detector turns off the first switch to stop the voltage discharge of the ultra-capacitor 411.

The first switch is turned on or off according to a turn-on command or a turn-off command transmitted from the first voltage detector, thereby connecting the third resistor R₃ and the ultra-capacitors 411 in series or disconnecting the connection. In an embodiment, the first switch may be implemented as a semiconductor device such as a field effect transistor (FET) device or a bipolar junction transistor (BJT) device, but is not limited thereto.

The overvoltage detectors 423 are connected to each of the ultra-capacitors 411 in parallel, and may perform a function of outputting an overvoltage alarm signal when the voltage of each ultra-capacitor 411 exceeds a predetermined second threshold voltage.

In an embodiment, the overvoltage detector 423 may include fourth to sixth resistors R₄ ~ R₆, a second voltage detector, a second switch, and a photo coupler.

The fourth and fifth resistors R₄ and R₅ are resistor devices for adjusting the second threshold voltage value and allow the second threshold voltage value to be adjusted by adjusting the resistance value. The sixth resistor R₆ is connected in series with the ultra-capacitor 411 and the photo coupler to drive the photo coupler when the second switch is turned on.

The second voltage detector detects the voltage of the ultra-capacitors 411. When the voltage of each ultra-capacitor 411 exceeds the second threshold voltage, the second voltage detector turns on the second switch, and turns off the second switch when the voltage of each ultra-capacitor 411 becomes equal to or lower than the second threshold voltage.

The second switch is turned on or off according to a turn-on command or a turn-off command transmitted from the second voltage detector, thereby connecting the sixth resistor R₆, the ultra-capacitor 411, and the photo coupler in series or disconnecting the connection. In an embodiment, the second switch may be implemented as a semiconductor device such as an FET device or a BJT device, but is not limited thereto.

The photo coupler is composed of a light-emitting device and a light-receiving device, and is a device that transmits a signal with light while electrically insulating an input signal and an output signal. When the second switch is turned on, the photo coupler outputs an output signal (i.e., an overvoltage alarm signal), based on an input signal input to an input terminal. Meanwhile, when the second switch is turned off, the photo coupler does not output a separate output signal because there is no input signal. For example, the overvoltage alarm signal output from the output terminal of the photo coupler may be a digital signal composed of a voltage of 5V.

The output connector 425 is connected to an input terminal of the signal insulating device 440 and may perform a function of transmitting a digital signal input from the cell management device 420 to the signal insulating device 440.

Meanwhile, in addition, the cell management device 420 may further include a temperature sensor (not shown) for measuring the internal temperature of the ultra-capacitor module 400, and a voltage sensing circuit (not shown) for measuring an intermediate voltage of the ultra-capacitor module 400. As the temperature sensor, a negative temperature coefficient (NTC) thermistor or a positive temperature coefficient (PTC) thermistor may be used.

The case module 430 may accommodate the cell assembly 410 formed by connecting the plurality of ultra-capacitors 411 in series and a cell management device 420 disposed adjacent to the cell assembly 410. The case module 430 may accommodate the cell assembly 410 by having an accommodation portion having a shape corresponding to the outer side of the ultra-capacitors 411.

The case module 430 may be formed by combining at least two or more case blocks having the same shape. An accommodating portion for accommodating the cell assembly 410 may be formed by combining the case blocks. The case module 430 may be implemented with an insulating material.

Electrode terminals 450 and 460 for electrical connection with the cell assembly 410 may be provided on one side of the case module 430. The electrode terminals 450 and 460 are used for charging/discharging the plurality of ultra-capacitors 411 mounted on the ultra-capacitor module 400. Accordingly, the electrode terminals 450 and 460 may be connected to an external power source or a load.

A signal insulation device 440 may be provided on one side of the case module 430. The signal insulation device 440 may be mounted between the positive terminal 450 and the negative terminal 460 disposed on one side of the case module 430, but is not limited thereto.

A digital signal connector 470 protruding to the outside may be provided on one side of the signal insulation device 440. The digital signal connector 470 is used to remotely monitor an operating state such as an intermediate voltage and an internal temperature of the ultra-capacitor module 400, and whether an overvoltage occurs in the ultra-capacitors. Accordingly, the digital signal connector 470 may be electrically connected to an external management system (or external management device 500).

An input terminal of the signal insulation device 440 may be configured to be electrically connected to the electrode terminals 450 and 460 of the ultra-capacitor module 400 and the output connector 425 of the cell management device 420. Accordingly, the signal insulation device 440 may receive driving power from the electrode terminals 450 and 460, and receive a digital signal related to the operating state of the ultra-capacitor module 400 from the output connector 425 of the cell management device 420. The digital signals include an overvoltage alarm signal, an intermediate voltage signal, or an internal temperature signal. Hereinafter, in this embodiment, the digital signal to be subjected to signal insulation will be described by exemplifying that it is an overvoltage alarm signal.

An output terminal of the signal insulation device 440 may be configured to be electrically connected to the digital signal connector 470. Accordingly, the output terminal of the signal insulation device 440 may be connected to the external management system 500 through the digital signal connector 470.

The signal insulation device 440 may output a switching operation signal (e.g., a switch on/off signal) corresponding to the overvoltage alarm signal, based on a DC voltage signal (e.g., 5V signal) corresponding to an overvoltage alarm signal received from the cell management device 420 of the ultra-capacitor module 400. Here, the DC voltage signal corresponding to the overvoltage alarm signal corresponds to the input signal of the signal insulation device 440, and the switching operation signal corresponding to the overvoltage alarm signal corresponds to the output signal of the signal insulation device 440.

The signal insulation device 440 may perform a function of insulating a digital signal (i.e., an overvoltage alarm signal) output from the cell management device 420 of the ultra-capacitor module 400. That is, the signal insulation device 440 may perform a function of electrically insulating a DC voltage signal corresponding to an input signal and a switching operation signal corresponding to an output signal.

In addition, the signal insulation device 440 may be disposed between the output connector 425 of the cell management device 420 and the digital signal connector 470, regardless of the occurrence of an overvoltage alarm signal, and perform a function of electrically insulating the output connector 425 of the cell management device 420 and the digital signal connector 470. Through this insulation structure, the signal insulation device 440 can improve high voltage insulation resistance between the electrode terminals 450 and 460 of the ultra-capacitor module 400 and the digital signal connector 470. A detailed description of the configuration and operation of the signal insulation device 440 will be described later with reference to the drawings.

As described above, the ultra-capacitor module according to the present disclosure includes a signal insulation device for insulating the digital signal output from the cell management device, thereby improving the high voltage insulation resistance between the electrode terminal of the ultra-capacitor module and the digital signal connector. That is, the ultra-capacitor module according to the present disclosure can satisfy the withstand voltage safety standard required by international standard regulations by using a signal insulation device disposed between the cell management device and the digital signal connector.

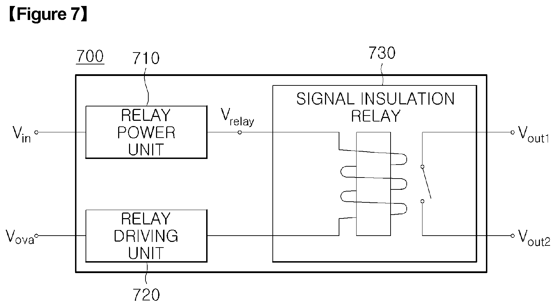

FIG. 7 is a block diagram illustrating a signal insulation device according to an embodiment of the present disclosure.

Referring to FIG. 7, the signal insulation device 440, 700 according to an embodiment of the present disclosure may include a relay power unit 710, a relay driving unit 720, and a signal insulation relay 730.

The relay power unit 710 may generate a driving voltage V_{relay} of the signal insulation relay 730 using an output voltage Vᵢₙ input from electrode terminals 450 and 460 of an ultra-capacitor module 400, and perform a function of providing the generated driving voltage V_{relay} to the signal insulation relay 730. To this end, the input terminal of the relay power unit 710 may be configured to be electrically connected to the electrode terminals 450 and 460 of the ultra-capacitor module 400, and the output terminal may be configured to be electrically connected to the input terminal of the signal insulation relay 730.

Typically, the voltage Vᵢₙ output from the electrode terminals 450 and 460 of the ultra-capacitor module 400 is a high voltage having a predetermined voltage range (e.g., 15V to 400V), and the driving voltage V_{relay} of the signal insulation relay 730 is a low voltage with a constant voltage value (e.g., 5V). Accordingly, the relay power unit 710 according to the present disclosure may include one or more DC/DC converters for converting a high voltage into a low voltage. As the DC/DC converter, a step-down converter or a buck converter may be used.

Meanwhile, in the present embodiment, the relay power unit 710 receives the relay driving power from the ultra-capacitor module 400, but is not limited thereto, and it will be apparent to those skilled in the art that relay driving power may be received from an external management system 500 or relay driving power may be received from a separate power source (not shown).

The relay driving unit 720 may perform a function of driving the signal insulation relay 730, based on the presence or absence of a digital signal output from the cell management device 420 of the ultra-capacitor module 400. Hereinafter, in this embodiment, the digital signal will be described by exemplifying that the digital signal is an overvoltage alarm signal Vₒᵥₐ output from the overvoltage detector 423 of the cell management device 420.

That is, the relay driving unit 720 controls the signal insulation relay 730 to be driven when a DC voltage signal Vₒᵥₐ corresponding to the overvoltage alarm signal is received from the output connector 425 of the cell management device 420, and controls the signal insulation relay 730 to not be driven when the DC voltage signal Vₒᵥₐ corresponding to the overvoltage alarm signal is not received. To this end, the input terminal of the relay driving unit 720 may be configured to be electrically connected to the output connector 425 of the cell management device 420, and the output terminal may be configured to be electrically connected to the input terminal of the signal insulation relay 730. The relay driving unit 720 may be composed of one or more semiconductor switch devices (i.e., transistor devices).

The signal insulation relay 730 may perform a function of providing an overvoltage alarm signal to the digital signal connector 470 while electrically insulating an input signal and an output signal of the signal insulation device 700. To this end, the input terminal of the signal insulation relay 730 may be configured to be electrically connected to the output terminal of the relay power unit 710 and the relay driving unit 720, and the output terminal may be configured to be electrically connected to the digital signal connector 470.

The signal insulation relay 730 is a device that transmits an overvoltage alarm signal while electrically insulating an input signal and an output signal of the signal insulation device 700 according to a driving command of the relay driving unit 720. Here, the input signal of the signal insulation device 700 is a DC voltage signal (e.g., 5V signal) corresponding to the overvoltage alarm signal, and the output signal is a switching operation signal (e.g., a switch on/off signal) corresponding to the overvoltage alarm signal.

In an embodiment, the signal insulation relay 730 may be composed of an electromagnet and a mechanical switch. When a current flows through the electromagnet according to the driving signal of the relay driving unit 720, the signal insulation relay 730 operates as a magnet to turn on the mechanical switch. Therefore, when the DC voltage signal Vₒᵥₐ corresponding to the overvoltage alarm signal is received from the output connector 425 of the cell management device 420 to the input terminal of the relay driving unit 720, the signal insulation relay 730 outputs a switch-on signal (closed signal) electrically insulated from the DC voltage signal to the digital signal connector 470 according to the driving signal of the relay driving unit 720.

Meanwhile, in another embodiment, the signal insulation relay 730 may be configured as a solid-state relay (SSR) without a mechanical contact.

The signal insulation device 700 may include a substrate assembly (not shown) and a housing module (not shown) accommodating the substrate assembly. The substrate assembly may be formed by mounting electronic components for implementing the relay power unit 710, the relay driving unit 720, and the signal insulation relay 730 on a circuit board.

First electronic components connected to the input terminal of the signal insulation relay 730 may be disposed in a first area of the circuit board, and second electronic components connected to the output terminal of the signal insulation relay 730 may be disposed in a second area of the circuit board. The first area and the second area of the circuit board may be physically spaced apart from each other by a predetermined distance or more. This is to not only electrically insulate the input signal and the output signal of the signal insulation device 700 but also physically insulate the input signal and the output signal.

As described above, the signal insulation device according to the present disclosure can insulate the overvoltage alarm signal output from the cell management device of the ultra-capacitor module, and at the same time, improve high voltage insulation resistance between the electrode terminal of the ultra-capacitor module and the digital signal connector.

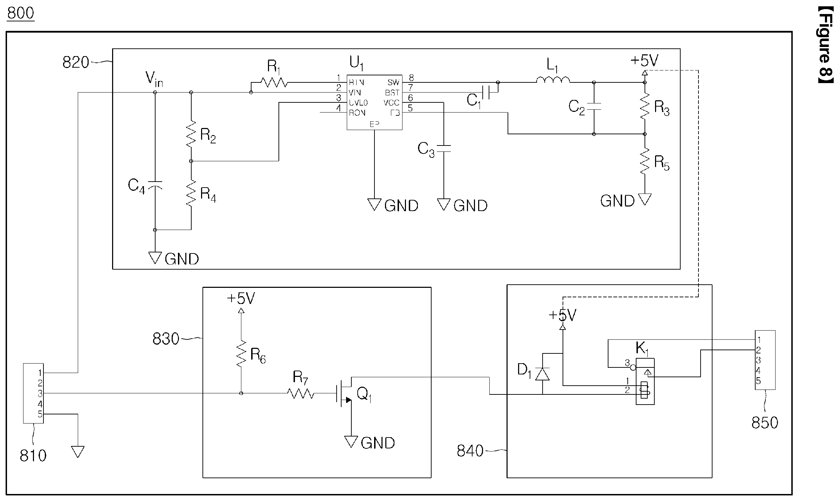

FIG. 8 is a detailed circuit diagram of a signal insulation device according to a first embodiment of the present disclosure.

Referring to FIG. 8, the signal insulation device 800 according to the first embodiment of the present disclosure may include a first connector 810, a relay power unit 820, a relay driving unit 830, a signal insulation relay 840, and a second connector 850.

The first connector 810 may transmit a voltage signal output from the electrode terminals 450 and 460 of the ultra-capacitor module 400 to the relay power unit 820, and transmit a digital signal (i.e., an overvoltage alarm signal) output from the cell management device 420 of the corresponding module 400 to the relay driver 830.

An input terminal of the first connector 810 may be electrically connected to the electrode terminals 450 and 460 of the ultra-capacitor module 400 and the output connector 425 of the cell management device 420. In an embodiment, the first terminal of the first connector 810 may be connected to the positive terminal 450 of the ultra-capacitor module 400, a fifth terminal of the first connector 810 may be connected to the negative terminal 460 of the ultra-capacitor module 400, and a third terminal of the first connector 810 may be connected to the output connector 425 of the cell management device 420.

An output terminal of the first connector 810 may be electrically connected to the relay power unit 820 and the relay driving unit 830. As an example, the first terminal of the first connector 810 may be connected to the input terminal of the relay power unit 820, the fifth terminal of the first connector 810 may be connected to ground, and the third terminal of the first connector 810 may be connected to an input terminal of the relay driving unit 830.

The relay power unit 820 may convert the output voltage Vᵢₙ of the ultra-capacitor module 400 input from the first connector 810 into a driving voltage of the signal insulation relay 840. That is, the relay power unit 820 may convert a high DC voltage into a low DC voltage and output the same to the signal insulation relay 840. As an example, the relay power unit 820 may be configured as one DC/DC converter. The DC/DC converter 820 may include first to fifth resistors R₁ to R₅, first to fourth capacitors C₁ to C₄, an inductor L₁, and an integrated circuit IC. The input terminal of the DC/DC converter 810 may be electrically connected to the first terminal of the first connector 810, and the output terminal may be electrically connected to the input terminal of the signal insulation relay 840. Accordingly, the DC/DC converter 820 may reduce the voltage Vᵢₙ of the ultra-capacitor module 400 input from the first terminal of the first connector 810 to a predetermined voltage (e.g., 5V), and then output the corresponding voltage to the signal insulation relay 840.

The relay driving unit 830 may drive the signal insulation relay 840 according to whether the DC voltage signal Vₒᵥₐ corresponding to the overvoltage alarm signal is received from the first connector 810.

In an embodiment, the relay driving unit 830 may include a sixth resistor R₆, a seventh resistor R₇, and a transistor device Q₁. As the transistor device, an FET device or a BJT device may be used, but is not limited thereto. Hereinafter, in this embodiment, the transistor device Q₁ will be described by exemplifying that it is an N-type MOSFET device. An input terminal of the relay driving unit 830 may be electrically connected to a third terminal of the first connector 810, and an output terminal may be electrically connected to an input terminal of the signal insulation relay 840.

When the DC voltage signal Vₒᵥₐ corresponding to the overvoltage alarm signal is input from the third terminal of the first connector 810, the relay driving unit 830 controls the current to flow through the electromagnet of the signal insulation relay 840 by turning on the transistor device Q₁. On the other hand, when the DC voltage signal Vₒᵥₐ corresponding to the overvoltage alarm signal is not input from the third terminal of the first connector 810, the relay driver 830 controls the transistor device Q₁ to turn off so that no current flows through the electromagnet of the signal insulation relay 840.

The signal insulation relay 840 may transmit an overvoltage alarm signal to the external management system 500 while electrically insulating an input signal and an output signal of the signal insulation device 800. In addition, the signal insulation relay 840 may electrically insulate between the output connector 425 of the cell management device 420 and the digital signal connector 470, and accordingly, may improve high voltage insulation resistance between the electrode terminals 450 and 460 of the ultra-capacitor module 400 and the digital signal connector 470.

In an embodiment, the signal insulation relay 840 may include a diode D_{1,} an electromagnet, and a mechanical switch. An input terminal of the signal insulation relay 840 may be electrically connected to the output terminal of the DC/DC converter 820 and the relay driver 830, and an output terminal may be electrically connected to the second connector 850.

In the case of the ultra-capacitor module 400 operating in the normal mode, since the DC voltage signal Vₒᵥₐ corresponding to the overvoltage alarm signal is not input from the first connector 810, the transistor device Q₁ of the relay driver 830 is in a turn off state, and the mechanical switch of the signal insulation relay 840 is in an off state. Accordingly, the signal insulation relay 840 outputs a switch off signal to the second connector 850. The user (or operator) of the external management system 500 can remotely identify that the operation mode of the ultra-capacitor module 400 is a normal mode through the switch-off signal.

On the other hand, when an overvoltage event occurs in the ultra-capacitor module 400, a DC voltage signal Vₒᵥₐ corresponding to the overvoltage alarm signal is input from the first connector 810, and the transistor device Q₁ of the relay driving unit 830 is turned on in response to the DC voltage signal Vₒᵥₐ, a current flows through the electromagnet of the signal insulation relay 840 to turn on the mechanical switch. Accordingly, the signal insulation relay 840 outputs an output signal (i.e., switch on signal) that is electrically insulated from the input signal (i.e., DC voltage signal) of the signal insulation device 800 to the second connector 850. A user (or operator) of the external management system 500 can remotely identify that an overvoltage alarm signal is generated from the ultra-capacitor module 400 through such a switch-on signal.

The second connector 850 may transmit the output signal of the signal insulation relay 840 to the external management system 500 through the digital signal connector 470. To this end, an input terminal of the second connector 850 may be electrically connected to the output terminal of the signal insulation relay 840, and an output terminal may be electrically connected to the digital signal connector 470.

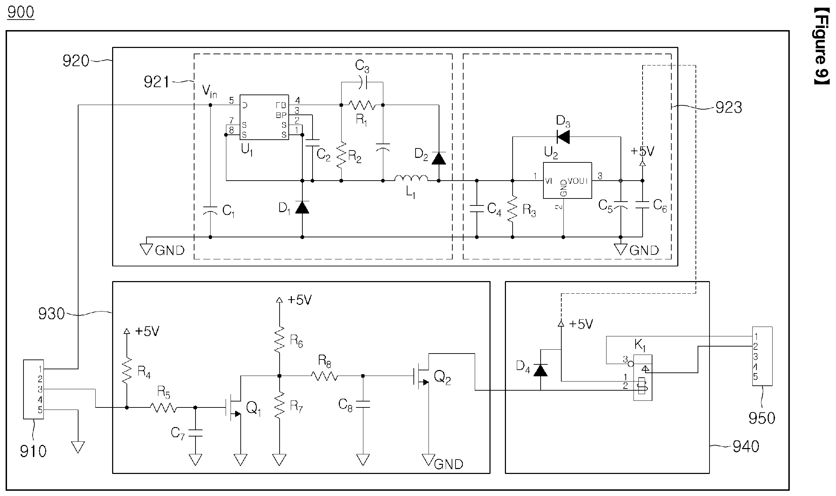

FIG. 9 is a detailed circuit diagram of a signal insulation device according to a second embodiment of the present disclosure.

Referring to FIG. 9, the signal insulation device 900 according to the second embodiment of the present disclosure may include a first connector 910, a relay power unit 920, a relay driving unit 930, a signal insulation relay 940, and a second connector 950.

The first connector 910, the signal insulation relay 940, and the second connector 950 of the signal insulation device 900 are the same as the first connector 810, the signal insulation relay 840, and the second connector 850 of the signal insulation device 800 illustrated in FIG. 8, and detailed description will be omitted.

The first connector 910 may transmit a voltage signal output from the electrode terminals 450 and 460 of the ultra-capacitor module 400 to the relay power unit 920, transmit a digital signal (i.e., an overvoltage alarm signal) output from the cell management device 420 of the corresponding module 400 to the relay driving unit 930. An input terminal of the first connector 910 may be electrically connected to the electrode terminals 450 and 460 of the ultra-capacitor module 400 and the output connector 425 of the cell management device 420, and an output terminal of the first connector 910 may be electrically connected to the relay power unit 920 and the relay driving unit 930.

The relay power unit 920 may convert the output voltage Vᵢₙ of the ultra-capacitor module 400 input from the first connector 910 into a driving voltage of the signal insulation relay 940. That is, the relay power unit 920 may convert a high DC voltage into a low DC voltage and output the same to the signal insulation relay 940.

In an embodiment, the relay power unit 920 may include two DC/DC converters 921 and 923. This is to output a constant voltage (e.g., 5V) at the output terminal of the relay power unit 920 even if the voltage Vᵢₙ of the ultra-capacitor module 400 having a very wide voltage range (e.g., 15V ~ 400V) is input to the input terminal of the relay power unit 920.

The first DC/DC converter 921 may include first and second resistors R₁ and R₂, first to third capacitors C₁ to C₃, an inductor L₁, first and second diodes D₁ and D₂, and a first integrated circuit U₁. An input terminal of the first DC/DC converter 921 may be electrically connected to the first terminal of the first connector 910, and an output terminal may be electrically connected to the input terminal of the second DC/DC converter 923. Accordingly, the first DC/DC converter 921 converts (decompresses) the voltage Vᵢₙ of the ultra-capacitor module 400 input from the first connector 910 to a predetermined first voltage, and output the converted first voltage to the second DC/DC converter 923.

The second DC/DC converter 923 may include a third resistor R₃, fourth to sixth capacitors C₄ to C₆, a third diode D₃, and a second integrated circuit U₂. An input terminal of the second DC/DC converter 923 may be electrically connected to an output terminal of the first DC/DC converter 921, and an output terminal may be electrically connected to an input terminal of the signal insulation relay 940. Accordingly, the second DC/DC converter 923 may convert (decompresses) the output voltage of the first DC/DC converter 921 into a predetermined second voltage, and output the converted second voltage to the signal insulation relay 940.

Meanwhile, in another embodiment, the relay power unit 920 may use a regulator instead of the second DC/DC converter 923. That is, the relay power unit 920 may be composed of a DC/DC converter and a regulator.

The relay driving unit 930 may drive the signal insulation relay 940 according to whether a DC voltage signal Vₒᵥₐ corresponding to an overvoltage alarm signal is received from the first connector 910. Unlike the relay driving unit 830 of FIG. 8, the relay driving unit 930 may include two transistor devices. This is to reverse the switching operation signal output from the signal insulation relay 940 of FIG. 9 and the switching operation signal output from the signal insulation relay 840 of FIG. 8 when an overvoltage event occurs.

In an embodiment, the relay driving unit 930 may include fourth to eighth resistors R₄ ~ R₈, seventh to eighth capacitors C₇ and C₈, and first and second transistor devices Q₁ and Q₂. FET devices or BJT devices may be used as the first and second transistor devices Q₁ and Q₂, but are not limited thereto. Hereinafter, in this embodiment, the first and second transistor devices Q₁ and Q₂ will be described by exemplifying that they are N-type MOSFET devices. An input terminal of the relay driver 930 may be electrically connected to the third terminal of the first connector 910, and an output terminal may be electrically connected to the input terminal of the signal insulation relay 940.

When a DC voltage signal Vₒᵥₐ corresponding to the overvoltage alarm signal is input from the third terminal of the first connector 910, the relay driving unit 930 turns on the first transistor device Q₁ and turns off the second transistor device Q₂ to control the current to not flow through the electromagnet of the signal insulation relay 940. Meanwhile, when the DC voltage signal Vₒᵥₐ corresponding to the overvoltage alarm signal is not input from the third terminal of the first connector 910, the relay driving unit 930 turns off the first transistor device Q₁ and turns on the second transistor device Q₂ to control current to flow through the electromagnet of the signal insulation relay 940.

The signal insulation relay 940 may transmit an overvoltage alarm signal to the external management system 500 while electrically insulating an input signal and an output signal of the signal insulation device 900. In addition, the signal insulation relay 940 may electrically insulate between the output connector 425 of the cell management device 420 and the digital signal connector 470, and accordingly, can improve high voltage insulation resistance between the electrode terminals 450 and 460 of the ultra-capacitor module 400 and the digital signal connector 470.

In an embodiment, the signal insulation relay 940 may include a fourth diode D₄, an electromagnet, and a mechanical switch. An input terminal of the signal insulation relay 940 may be electrically connected to the output terminal of the relay power unit 920 and the relay driving unit 930, and an output terminal may be electrically connected to the second connector 950.

In the case of the ultra-capacitor module 400 operating in the normal mode, since the DC voltage signal Vₒᵥₐ corresponding to the overvoltage alarm signal is not input from the first connector 910, the first transistor device Q₁ of the relay driving unit 930 is turned off, and the second transistor device Q₂ is turned on. When the second transistor device Q₂ is turned on, current flows through the electromagnet of the signal insulation relay 940 to turn on the mechanical switch. Accordingly, the signal insulation relay 940 outputs a switch on signal to the second connector 950. The user (or operator) of the external management system 500 can remotely identify that the operation mode of the ultra-capacitor module 400 is a normal mode through such a switch-on signal.

Meanwhile, when an overvoltage event occurs in the ultra-capacitor module 400, since a DC voltage signal Vₒᵥₐ corresponding to the overvoltage alarm signal is input from the first connector 910, the first transistor device Q₁ of the relay driving unit 930 is turned on, and the second transistor device Q₂ is turned off. When the second transistor device Q₂ is turned off, current does not flow through the electromagnet of the signal insulation relay 940 and the mechanical switch is turned off. Accordingly, the signal insulation relay 940 outputs an input signal (i.e., a DC voltage signal) and an output signal (i.e., a switch off signal) electrically insulated from the signal insulation device 900 to the second connector 850. A user (or operator) of the external management system 500 can remotely identify that an overvoltage alarm signal is generated from the ultra-capacitor module 400 through such a switch-off signal.

The second connector 950 may transmit the output signal of the signal insulation relay 940 to the external management system 500 through the digital signal connector 470. To this end, an input terminal of the second connector 950 may be electrically connected to the output terminal of the signal insulation relay 940, and an output terminal may be electrically connected to the digital signal connector 470.

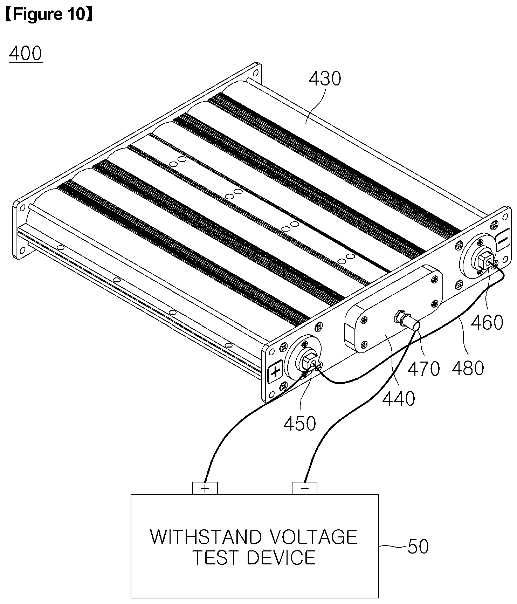

FIG. 10 is a diagram illustrating a method of testing the withstand voltage between an electrode terminal and a digital signal connector of an ultra-capacitor module according to the present disclosure. As illustrated in FIG. 10, in a state in which the positive terminal 450 and the negative terminal 460 of the ultra-capacitor module 400 are connected with a cable 480, when the measurement terminals of the withstand voltage test device 50 are connected to the electrode terminals 450 and 460 and the digital signal connector 470, respectively, and a predetermined high voltage (e.g., 4.2 kV) is applied, it can be seen that the insulation resistance between the electrode terminals 450 and 460 of the ultra-capacitor module 400 and the digital signal connector 470 is not destroyed.

As such, the ultra-capacitor module 400 according to the present disclosure includes a signal insulation device 440 disposed between the output connector 425 of the cell management device 420 and the digital signal connector 470, so that high voltage insulation resistance between the electrode terminals 450 and 460 of the corresponding ultra-capacitor module 400 and the digital signal connector 470 can be improved.

Meanwhile, in the above embodiment, a method of insulating an overvoltage alarm signal among digital signals output from the cell management device 420 of the ultra-capacitor module 400 is described, but is not limited thereto, and it will be apparent to those skilled in the art that the same technical idea of the present disclosure can be applied to other digital signals other than the overvoltage alarm signal.

Although various embodiments of the present disclosure have been described in detail above, the scope of the present disclosure is not limited thereto, and various modifications and improvements of those skilled in the art using the basic concept of the present disclosure defined in the following claims also belong to the scope of the present disclosure.

## Claims

1. An ultra-capacitor module (400) comprising:
a cell assembly (410) including a plurality of ultra-capacitors;
a cell management device (420) electrically connected to the cell assembly (410), the cell management device (420) including a plurality of overvoltage detectors (423), each of which is electrically connected to one of the plurality of ultra-capacitors;
a case module (430) for accommodating the cell assembly (410) and the cell management device (420); and
a signal insulation device (440, 700) mounted on the case module (430) and electrically connected to the cell management device (420),
wherein the signal insulation device (440, 700) is **characterized by** comprising:
a signal insulation relay (730) for insulating a digital signal output from the cell management device (420);
a relay power unit (710) of which an output terminal is electrically connected to a first input terminal of the signal insulation relay (730); and
a relay driving unit (720) of which an output terminal is electrically connected to a second input terminal of the signal insulation relay (730).

2. The ultra-capacitor module (400) of claim 1, wherein the signal insulation relay (730) comprises an electromagnet and a mechanical switch.

3. The ultra-capacitor module (400) of claim 1, wherein the signal insulation relay (730) comprises a solid state relay without a mechanical contact.

4. The ultra-capacitor module (400) of claim 1, wherein the relay power unit (710) is electrically connected to electrode terminals (450, 460) mounted on the case module (430) to receive an output voltage of the electrode terminals (450, 460).

5. The ultra-capacitor module (400) of claim 1, wherein the relay driving unit (720) has an input terminal electrically connected to an output connector (425) of the cell management device (420) to receive the digital signal, and the output terminal electrically connected to the second input terminal of the signal insulation relay (730).

6. The ultra-capacitor module (400) of claim 1, wherein the signal insulation device (440, 700) comprises a substrate assembly and a housing module accommodating the substrate assembly, and
wherein the substrate assembly is formed by mounting electrical components corresponding to the relay power unit (710), the relay driving unit (720), and the signal insulation relay (730) onto a circuit board.

7. The ultra-capacitor module (400) of claim 6, wherein, when first electronic components connected to the input terminals of the signal insulation relay (730) are mounted on a first area of the circuit board and second electronic components connected to an output terminal of the signal insulation relay (730) are mounted on a second area of the circuit board, the first area and the second area of the circuit board are arranged to be spaced apart by a predetermined distance or more.

8. The ultra-capacitor module (400) of claim 1, wherein the signal insulation device (440, 700) has input terminals electrically connected to electrode terminals (450, 460) of the ultra-capacitor module (400) and an output connector (425) of the cell management device (420), respectively, and
output terminals of the overvoltage detectors (423) are electrically connected to an input terminal of the output connector (425).

9. The ultra-capacitor module (400) of claim 1, further comprising a digital signal connector (470) configured to be mounted on one side of the signal insulation device (440, 700).

10. The ultra-capacitor module (400) of claim 9, wherein the signal insulation device (440, 700) is disposed between an output connector (425) of the cell management device (420) and the digital signal connector (470) to electrically insulate between the output connector (425) of the cell management device (420) and the digital signal connector (470).

11. The ultra-capacitor module (400) of claim 9, wherein the signal insulation device (440, 700) outputs the insulated digital signal to an external management system (500) through the digital signal connector (470).

## Patentansprüche

1. Ultrakondensatormodul (400) umfassend:
eine Zellenanordnung (410) umfassend eine Vielzahl von Ultrakondensatoren;
eine Zellenmanagementvorrichtung (420), die mit der Zellenanordnung (410) elektrisch verbunden ist, wobei die Zellenmanagementvorrichtung (420) eine Vielzahl von Überspannungsdetektoren (423) umfasst, von denen jeder mit einem der Vielzahl von Ultrakondensatoren elektrisch verbunden ist;
ein Gehäusemodul (430) zum Aufnehmen der Zellenanordnung (410) und der Zellenmanagementvorrichtung (420); und
eine Signalisolationsvorrichtung (440, 700), die an dem Gehäusemodul (430) montiert und mit der Zellenmanagementvorrichtung (420) elektrisch verbunden ist,
wobei die Signalisolationsvorrichtung (440, 700) **dadurch gekennzeichnet ist, dass** sie umfasst:
ein Signalisolationsrelais (730) zum Isolieren eines Digitalsignalausgangs von der Zellenmanagementvorrichtung (420);
eine Relaisleistungseinheit (710), von der ein Ausgangsanschluss mit einem ersten Eingangsanschluss des Signalisolationsrelais (730) elektrisch verbunden ist; und
eine Relaisantriebseinheit (720), von der ein Ausgangsanschluss mit einem zweiten Eingangsanschluss des Signalisolationsrelais (730) elektrisch verbunden ist.

2. Ultrakondensatormodul (400) nach Anspruch 1, wobei das Signalisolationsrelais (730) einen Elektromagnet und einen mechanischen Schalter umfasst.

3. Ultrakondensatormodul (400) nach Anspruch 1, wobei das Signalisolationsrelais (730) ein Festkörperrelais ohne einen mechanischen Kontakt umfasst.

4. Ultrakondensatormodul (400) nach Anspruch 1, wobei die Relaisleistungseinheit (710) mit Elektrodenanschlüssen (450, 460) elektrisch verbunden ist, die an dem Gehäusemodul (430) montiert sind, um eine Ausgangsspannung der Elektrodenanschlüsse (450, 460) zu empfangen.

5. Ultrakondensatormodul (400) nach Anspruch 1, wobei die Relaisantriebseinheit (720) einen Eingangsanschluss, der mit einem Ausgangsverbinder (425) der Zellenmanagementvorrichtung (420) elektrisch verbunden ist, um das digitale Signal zu empfangen, und den Ausgangsanschluss aufweist, der mit dem zweiten Eingangsanschluss des Signalisolationsrelais (730) elektrisch verbunden ist.

6. Ultrakondensatormodul (400) nach Anspruch 1, wobei die Signalisolationsvorrichtung (440, 700) eine Substratanordnung und ein die Substratanordnung aufnehmendes Gehäusemodul umfasst, und
wobei die Substratanordnung durch Montieren elektrischer Komponenten, die der Relaisleistungseinheit (710), der Relaisantriebseinheit (720), und dem Signalisolationsrelais (730) entsprechen, auf einer Leiterplatte gebildet wird.

7. Ultrakondensatormodul (400) nach Anspruch 6, wobei, wenn erste elektronische Komponenten, die mit den Eingangsanschlüssen des Signalisolationsrelais (730) verbunden sind, an einem ersten Bereich der Leiterplatte montiert werden und zweite elektronische Komponenten, die mit einem Ausgangsanschluss des Signalisolationsrelais (730) verbunden sind, an einem zweiten Bereich der Leiterplatte montiert werden, der erste Bereich und der zweite Bereich der Leiterplatte angeordnet sind, um durch einen vorgegebenen Abstand oder mehr beabstandet zu sein.

8. Ultrakondensatormodul (400) nach Anspruch 1, wobei die Signalisolationsvorrichtung (440, 700) Eingangsanschlüsse aufweist, die mit Elektrodenanschlüssen (450, 460) des Ultrakondensatormoduls (400) und einem Ausgangsverbinder (425) der Zellenmanagementvorrichtung (420) jeweils elektrisch verbunden sind, und
Ausgangsanschlüsse der Überspannungsdetektoren (423) mit einem Eingangsanschluss des Ausgangsverbinders (425) elektrisch verbunden sind.

9. Ultrakondensatormodul (400) nach Anspruch 1, ferner umfassend einen Digitalsignalverbinder (470), der dazu konfiguriert ist, auf einer Seite der Signalisolationsvorrichtung (440, 700) montiert zu sein.

10. Ultrakondensatormodul (400) nach Anspruch 9, wobei die Signalisolationsvorrichtung (440, 700) zwischen einem Ausgangsverbinder (425) der Zellenmanagementvorrichtung (420) und dem Digitalsignalverbinder (470) angeordnet ist, um zwischen dem Ausgangsverbinder (425) der Zellenmanagementvorrichtung (420) und dem Digitalsignalverbinder (470) elektrisch zu isolieren.

11. Ultrakondensatormodul (400) nach Anspruch 9, wobei die Signalisolationsvorrichtung (440, 700) das isolierte digitale Signal durch den Digitalsignalverbinder (470) zu einem externen Managementsystem (500) ausgibt.

## Revendications

1. Module d'ultracondensateurs (400) comprenant :
un ensemble de cellules (410) comprenant une pluralité d'ultracondensateurs ;
un dispositif de gestion de cellules (420) connecté électriquement à l'ensemble de cellules (410), le dispositif de gestion de cellules (420) comprenant une pluralité de détecteurs de surtension (423), chacun étant connecté électriquement à l'un de la pluralité d'ultracondensateurs ;
un module de boîtier (430) destiné à accueillir l'ensemble de cellules (410) et le dispositif de gestion de cellules (420) ; et
un dispositif d'isolation de signal (440, 700) monté sur le module de boîtier (430) et connecté électriquement au dispositif de gestion de cellules (420),
le dispositif d'isolation de signal (440, 700) étant **caractérisé en ce qu'**il comprend :
un relais d'isolation de signal (730) destiné à isoler un signal numérique issu du dispositif de gestion de cellules (420) ;
une unité d'alimentation de relais (710) dont une borne de sortie est connectée électriquement à une première borne d'entrée du relais d'isolation de signal (730) ; et
une unité de commande de relais (720) dont une borne de sortie est connectée électriquement à une seconde borne d'entrée du relais d'isolation de signal (730).

2. Module d'ultracondensateurs (400) selon la revendication 1, dans lequel le relais d'isolation de signal (730) comprend un électroaimant et un interrupteur mécanique.

3. Module d'ultracondensateurs (400) selon la revendication 1, dans lequel le relais d'isolation de signal (730) comprend un relais à semi-conducteurs sans contact mécanique.

4. Module d'ultracondensateurs (400) selon la revendication 1, dans lequel l'unité d'alimentation de relais (710) est connectée électriquement à des bornes d'électrodes (450, 460) montées sur le module de boîtier (430) afin de recevoir une tension de sortie des bornes d'électrodes (450, 460).

5. Module d'ultracondensateurs (400) selon la revendication 1, dans lequel l'unité de commande de relais (720) présente une borne d'entrée connectée électriquement à un connecteur de sortie (425) du dispositif de gestion de cellules (420) pour recevoir le signal numérique, et la borne de sortie connectée électriquement à la seconde borne d'entrée du relais d'isolation de signal (730).

6. Module d'ultracondensateurs (400) selon la revendication 1, dans lequel le dispositif d'isolation de signal (440, 700) comprend un ensemble de substrat et un module de logement accueillant l'ensemble de substrat, et dans lequel
l'ensemble de substrat est formé par le montage de composants électriques correspondant à l'unité d'alimentation de relais (710), à l'unité de commande de relais (720) et au relais d'isolation de signal (730) sur une carte de circuit imprimé.

7. Module d'ultracondensateurs (400) selon la revendication 6, dans lequel, lorsque des premiers composants électroniques connectés aux bornes d'entrée du relais d'isolation de signal (730) sont montés sur une première zone de la carte de circuit imprimé, et des seconds composants électroniques connectés à une borne de sortie du relais d'isolation de signal (730) sont montés sur une seconde zone de la carte de circuit imprimé, la première zone et la seconde zone de la carte de circuit imprimé sont disposées de manière à être espacées d'une distance prédéterminée ou plus.

8. Module d'ultracondensateurs (400) selon la revendication 1, dans lequel le dispositif d'isolation de signal (440, 700) comprend des bornes d'entrée connectées électriquement respectivement aux bornes d'électrodes (450, 460) du module d'ultracondensateurs (400) et à un connecteur de sortie (425) du dispositif de gestion de cellules (420),
des bornes de sortie des détecteurs de surtension (423) étant connectées électriquement à une borne d'entrée du connecteur de sortie (425).

9. - Module d'ultracondensateurs (400) selon la revendication 1, comprenant en outre un connecteur de signal numérique (470) configuré pour être monté sur un côté du dispositif d'isolation de signal (440, 700).

10. Module d'ultracondensateurs (400) selon la revendication 9, dans lequel le dispositif d'isolation de signal (440, 700) est disposé entre un connecteur de sortie (425) du dispositif de gestion de cellules (420) et le connecteur de signal numérique (470) afin d'assurer une isolation électrique entre le connecteur de sortie (425) du dispositif de gestion de cellules (420) et le connecteur de signal numérique (470).

11. Module d'ultracondensateurs (400) selon la revendication 9, dans lequel le dispositif d'isolation de signal (440, 700) délivre le signal numérique isolé à un système de gestion externe (500) par l'intermédiaire du connecteur de signal numérique (470).
